# FASCICULE DE BREVET EUROPEEN

(11) **EP 1 507 626 B1**
(45) Date de publication et mention de la délivrance du brevet: **07.03.2007**
(21) Numéro de dépôt: 03749901.9
(22) Date de dépôt: 11.04.2003
(51) Int. Cl.: B23K 28/02, B23K 26/14

(54) **PROCEDE DE SOUDAGE HYBRIDE LASER-ARC EN MULTI-EPAISSEURS AVEC ATTAQUE SUR CHANTS**
VERFAHREN ZUM HYBRID LASER-LICHTBOGENMEHRFACHDICKENSCHWEISSEN MIT KANTENSCHWEISSUNG
METHOD FOR HYBRID MULTIPLE-THICKNESS LASER-ARC WELDING WITH EDGE WELDING

(30) Priorité: 07.05.2002 FR 0205687
(43) Date de publication de la demande: 23.02.2005
(73) Titulaire: L'AIR LIQUIDE, Société Anonyme à Directoire et Conseil de Surveillance pour l'Etude et l'Exploitation des, 75321 Paris Cedex 07 (FR); AIR LIQUIDE WELDING FRANCE, 75007 Paris (FR)
(72) Inventeur: LEFEBVRE, Philippe, F-95310 Saint-Ouen l'Aumone (FR); MATILE, Olivier, F-75018 Paris (FR)
(74) Mandataire: Pittis, Olivier
(86) Numéro de dépôt international: PCT/FR2003/001155
(87) Numéro de publication internationale: WO 2003/095141

(56) Documents cités:
- US-A- 4 507 540
- US-A- 5 373 135
- US-A- 5 700 989

## Description

La présente invention concerne l'application d'un procédé de soudage hybride combinant un faisceau laser et un arc électrique au soudage multi-épaisseurs, c'est-à-dire à l'assemblage par soudage de plusieurs pièces métalliques empilées les unes sur les autres, dans lequel la fusion se fait sur chants, c'est-à-dire au niveau des bords latéraux des pièces à souder.

US 5 700 989 décrit une méthode de soudage hybride laser-arc électrique de deux pièces bord-à-bord selon le préambule de la revendication 1.

Il est connu que le soudage de multi-épaisseurs, c'est-à-dire le soudage de plusieurs pièces métalliques superposées les unes aux autres, en général au moins trois pièces superposées les unes aux autres, n'est pas facile à réaliser au plan industriel.

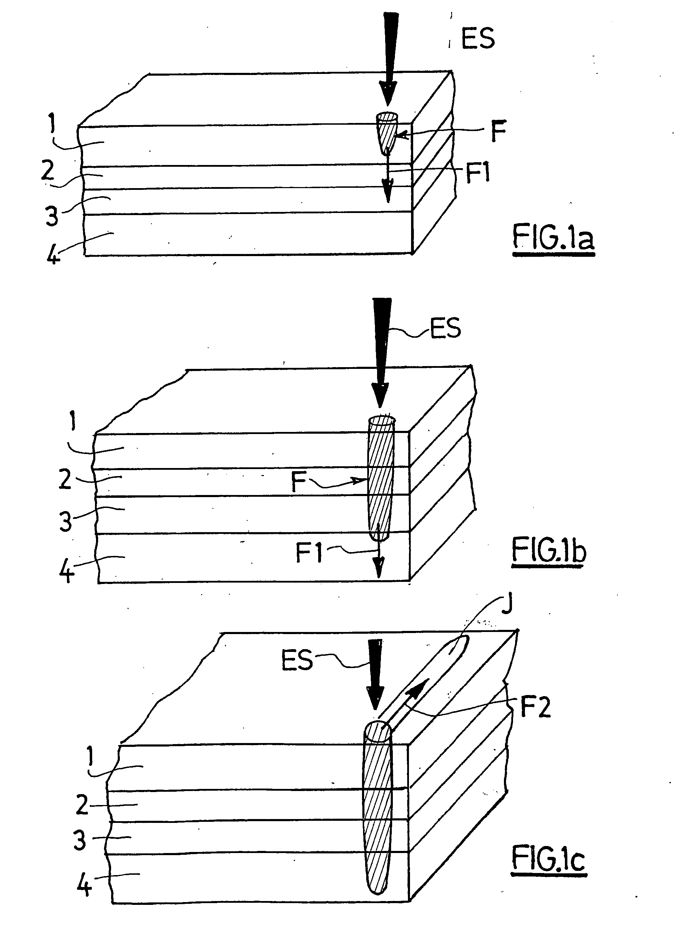

Actuellement, comme représenté sur les figures 1a à 1c, lorsque plusieurs pièces superposées 1 à 4 doivent être assemblées par soudage selon un joint J de soudage, par exemple par soudage laser, à l'arc ou par faisceau d'électrons, il est classique d'opérer une fusion des pièces 1 à 4 en attaquant la fusion F sur la surface latérale de la première pièce 1 qui située immédiatement en regard de la torche de soudage délivrant l'énergie de soudage ES (i.e. arc électrique, faisceau laser ou d'électrons...), de poursuivre cette fusion F à travers toute l'épaisseur de cette première pièce 1, puis à travers les épaisseurs successives des pièces 2 à 4 positionnées sous la première pièce 1 (sens de la flèche F1) jusqu'à obtenir une fusion totale selon l'épaisseur des pièces 1 à 3 et une fusion totale ou partielle de la dernière pièce 4 située sous l'empilement, c'est-à-dire la pièce la plus éloignée de la première pièce 1. Une fois cette fusion réalisée, la torche de soudage et les pièces 1 à 4 sont déplacées relativement l'une par rapport aux autres de sorte de continuer cette fusion le long de toute la trajectoire de soudage (sens de la flèche F2) de manière à former le joint J de soudure souhaité.

Or, cette façon de souder plusieurs pièces superposées posent plusieurs problèmes.

Tout d'abord, on comprend que devoir réaliser une pénétration totale de la quasi-totalité des pièces nécessite de mettre en oeuvre une énergie de soudage d'autant plus importante que le nombre de pièces à assembler est important et surtout que l'épaisseur totale à fondre est élevée.

De ce fait, si l'énergie n'est pas suffisante, il se peut que le soudage de la dernière pièce, c'est-à-dire celle située sous l'empilement, soit imparfait ou déficient.

Par ailleurs, lorsque les pièces à souder sont des tôles fines, typiquement des tôles ayant une épaisseur de 0.3 à 1.5 mm, on observe souvent des déformations des extrémités de ces tôles, du fait de l'énergie importante mise en oeuvre pendant le soudage, conduisant à un relèvement de ces bords ou extrémités, ce qui peut poser des problèmes de corrosions ultérieurs et présenter des dangers pour les utilisateurs, du fait de la présence d'arêtes saillantes.

D'autre part, le bridage, c'est-à-dire l'opération qui consiste à plaquer et à maintenir, les unes sur les autres, les tôles de ce type d'assemblage n'est pas facile à réaliser car il n'y a souvent pas assez de place pour positionner les mors d'assemblage de chaque coté du cordon de soudage.

Le but de la présente invention est alors de proposer un procédé de soudage permettant de résoudre les problèmes ci-dessus et d'obtenir un soudage efficace et amélioré de plusieurs pièces métalliques superposés, c'est-à-dire un soudage en multi-épaisseurs.

La solution de l'invention est alors un procédé de soudage hybride arc-laser de plusieurs pièces métalliques à souder mettant en oeuvre au moins un faisceau laser et au moins un arc électrique, caractérisé en ce que lesdites pièces métalliques sont superposées en une configuration multi-épaisseurs et en ce que ledit faisceau laser et ledit arc électrique viennent souder sur chants ladite configuration multi-épaisseurs.

Selon le cas, le procédé de l'invention peut comprendre l'une ou plusieurs des caractéristiques techniques suivantes :
- l'arc électrique et le faisceau laser viennent frapper et souder une même zone située sur chants.
- l'arc électrique et le faisceau laser viennent frapper approximativement à mi-distance selon l'épaisseur (E) de la configuration multi-épaisseurs.
- les pièces sont des plaques ou des feuilles métalliques.
- le faisceau laser est généré par un oscillateur laser de type CO₂ ou YAG.
- la configuration multi-épaisseurs comprend de 2 à 100 pièces, de préférence de 3 à 10 pièces.
- la configuration multi-épaisseurs a une épaisseur totale (E) comprise entre 0,5 mm et 20 mm, de préférence 1 à 10 mm.
- le faisceau laser et l'arc plasma sont délivrés, en étant combinés ensemble, par le même orifice d'une buse de soudage.
- durant le soudage, on met en oeuvre un gaz contenant de l'argon, de l'hélium ou les deux.
- l'arc électrique est généré par une électrode fusible ou non fusible.
- les pièces à souder sont en un matériau choisi parmi les aciers alliés ou non-alliés, ferritiques ou austénitiques, éventuellement revêtus d'une couche de zinc.
- la distance (D) de pénétration de la soudure sur chants est comprise entre 0,5 mm et 10 mm, de préférence de 0,5 à 1 mm.

### Exemple de réalisation

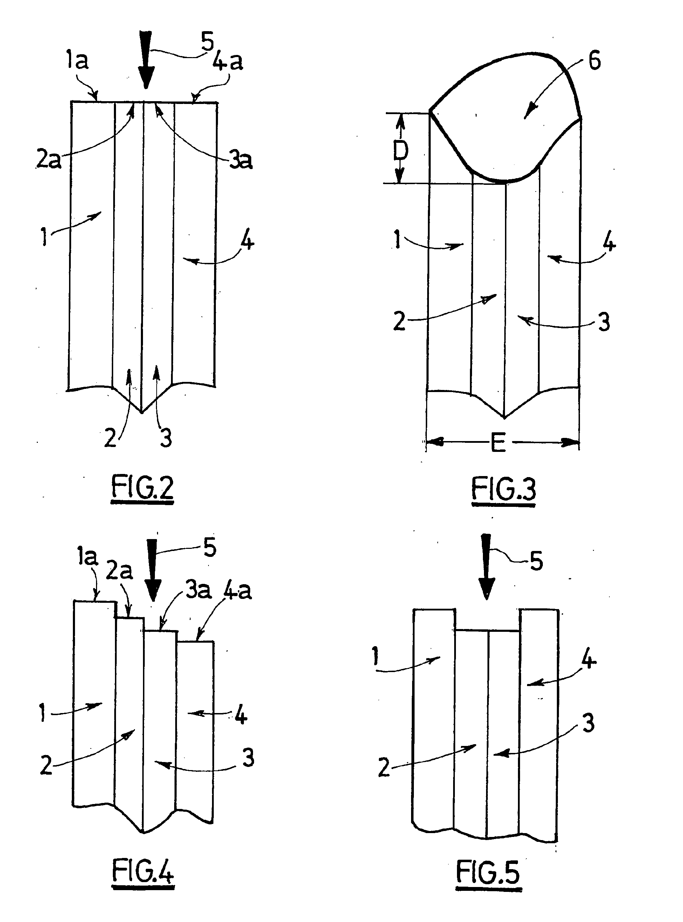

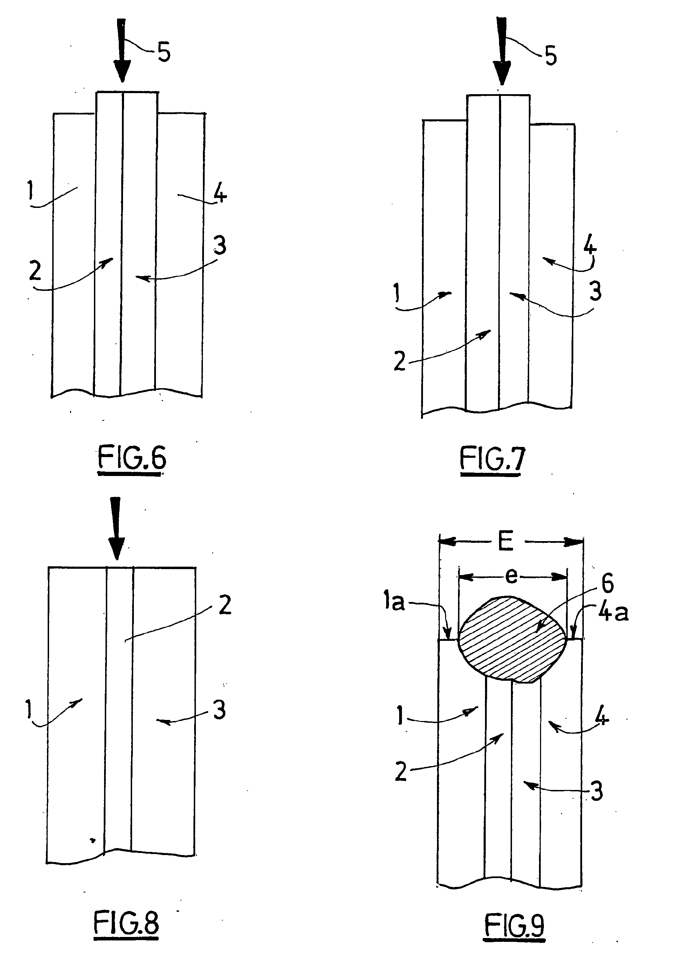

Le procédé de soudage hybride arc-laser de plusieurs pièces superposées en une configuration multi-épaisseurs selon l'invention est illustré sur les figures 2 à 10.

Comme montré sur la figure 2, selon l'invention, les pièces métalliques 1 à 4 à assembler par soudage, qui sont ici 4 feuilles ou plaques d'acier, sont d'abord superposées dans la configuration multi-épaisseurs dans laquelle elles doivent être soudées.

Plus précisément, les pièces 1 à 4 sont positionnées de telle manière que leurs chants 1a à 4a respectifs soient situés en regard de la tête de soudage par laquelle sont délivrés le faisceau laser et l'arc électrique.

Le faisceau laser et l'arc électrique (schématisés par la flèche 5) viennent alors frapper les chants 1a à 4a des pièces 1 à 4 de la configuration ou assemblage multi-épaisseurs de manière à engendre une fusion desdits chants 1a à 4a et la formation subséquente d'un joint 6 de soudure entre lesdites pièces métalliques au niveau desdits chants (1a à 4a) par solidification du métal fondu, comme montré sur les figures 3, 9 et 10.

En d'autres termes, le procédé de soudage de l'invention repose sur un assemblage par fusion des chants 1a à 4a des pièces, c'est-à-dire des bords situés aux extrémités des pièces 1 à 4 à assembler, sous l'effet combiné du faisceau laser et de l'arc électrique, et non plus sur une fusion par pénétration totale des pièces avec attaque par l'une des surfaces latérales des pièces, comme classiquement opéré dans l'art antérieur et illustré sur les figures 1a à 1c.

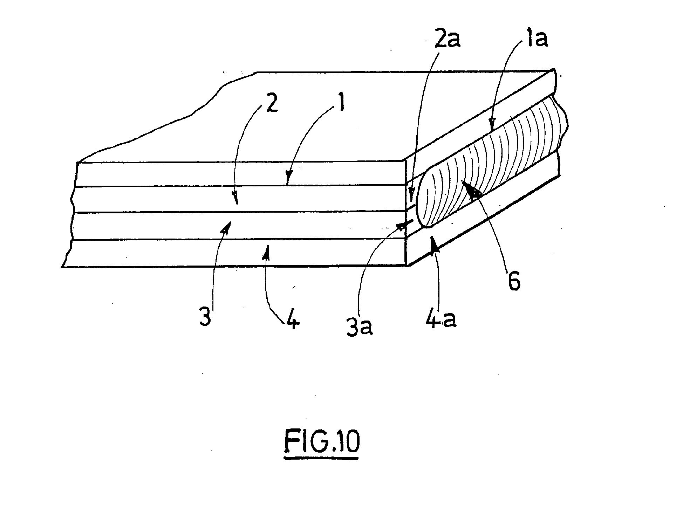

Le joint de soudure 6 peut être formé par fusion totale du chant de chacune des pièces 1 à 4, c'est-à-dire selon toute l'épaisseur E, comme illustré sur la figure 3, ou alors par fusion totale des pièces 2, 3 situées au centre de l'assemblage et uniquement fusion partielle des chants des pièces 1, 4 situées de part et d'autre de l'assemblage multi-épaisseurs, comme illustré sur la figure 9 où l'on voit que, bien qu'une partie des chants 1a et 4a des pièces 1 et 4, respectivement, n'ait pas été fondue, on obtient néanmoins une soudure 6 efficace de l'assemblage multi-épaisseurs sur une épaisseur moindre e (e<E).

Grâce au procédé de l'invention, une fusion totale de tout l'épaisseur E de l'assemblage multi-épaisseur n'étant pas nécessaire (voir figure 9), on comprend aisément que la quantité d'énergie à mettre en oeuvre est moindre que celle classiquement mise en oeuvre dans l'art antérieur (figure 1a à 1c), ce qui minimise d'autant le risque de déformation des pièces soudées.

De plus, le soudage selon l'invention se faisant sur chants, les extrémités des pièces 1 à 4 ainsi soudées ne peuvent plus se soulever et constituer des arêtes saillantes dangereuses pour les utilisateurs et favorisant la corrosion ultérieure.

D'autre part, le procédé hybride permet d'obtenir à la fois la pénétration et l'étalement du cordon nécessaire au soudage sur chants car ni la laser seul, ni l'arc électrique seul ne permettent d'obtenir à la fois la vitesse de soudage, la pénétration et l'étalement compatible avec une bonne productivité industrielle. A titre d'exemple, pour une configuration multi-épaisseurs de 3 mm où l'on vient souder sur chants 4 tôles d'épaisseurs 1 et 0,5 mm à une puissance laser CO₂ de 3 kW et à 130 A de courant d'arc, on obtient des vitesses de soudage de l'ordre de 4 à 5 m/mn.

Le procédé de l'invention peut, en outre, être utilisé pour souder des pièces dont les chants 1a à 4a sont compris dans un même plan, comme montré en figure 2, mais aussi pour souder des pièces dont les chants 1a à 4a sont situés dans des plans différents, par exemple des chants formant un assemblage en escalier (figure 4) ou des assemblages à plusieurs niveaux ou paliers (figures 5 à 7).

Par ailleurs, bien que le procédé ait été exemplifié dans le cadre du soudage d'une configuration multi-épaisseurs formée de 4 plaques, il s'avère qu'il est également applicable à des configurations comprenant seulement 2 ou 3 pièces, par exemple une configuration à 3 pièces 1 à 3 telle qu'illustrée en figure 8 ou, à l'inverse, à des configurations comportant au moins 5 pièces. Dans tous les cas, il est essentiel que le faisceau laser et l'arc viennent frapper et fondre les pièces sur chants, c'est-à-dire dans le sens de la flèche 5 des figures 2 à 8.

Le procédé de l'invention permet de souder des assemblages multi-épaisseurs dont l'épaisseur totale est comprise entre 0,5 mm et 20 mm. Les pièces à souder peuvent, quant à elles, avoir une même épaisseur ou des épaisseurs différentes.

Le procédé de soudage hybride arc-laser applicable à la présente invention est tout à fait classique et est basée sur une combinaison d'un faisceau laser et d'un arc électrique venant frapper un même point ou une même zone de sorte que les énergies de l'arc et du faisceau se combinent pour obtenir une fusion efficace des pièces à souder.

Cette technique est parfaitement connue de l'homme du métier et des procédés de soudage hybrides arc et laser ont été décrits notamment dans les documents : EP-A-1162026 ; EP-A-1160047 ; EP-A-1160046 ; EP-A-1160048 ; WO-A-02/16071 ; EP-A-793558 ; EP-A-782489 ; EP-A-800434 ; US-A-5,006,688 ; US-A-5,700,989 ; EP-A-844042 ; *Laser GTA'Welding of aluminium alloy 5052,* TP Diebold et CE Albright, 1984, p. 18-24 ; SU-A-1815085, US-A-4,689,466 ; *Plasma arc augmented laser welding,* RP Walduck et J. Biffin, p.172-176, 1994; ou *TIG or MIG arc augmented laser welding of thick mild steel plate, Joining and Materials.*

Le procédé arc-laser consiste à générer un arc électrique entre une électrode, fusible ou non fusible, et la ou les pièces à souder, et à focaliser un faisceau laser de puissance, notamment un laser de type YAG ou de type CO₂, dans la zone d'arc, c'est-à-dire au niveau ou dans le plan de joint à souder.

La mise en oeuvre d'un procédé de soudage hybride arc-laser requiert l'utilisation d'une tête de soudage qui permet de combiner le faisceau laser et son dispositif de focalisation, ainsi qu'une électrode de soudage adaptée, fusible ou non. Le faisceau laser est émis simultanément ou subséquemment à la formation de l'arc de manière à ce que ledit faisceau se combine avec l'arc.

Plusieurs configurations de têtes sont décrites dans les documents ci-dessus mentionnés et l'on peut dire, en résumé, que le faisceau laser et l'arc électrique peuvent être délivrés par une seule et même tête de soudage, c'est-à-dire qu'ils sortent par le même orifice, ou alors par deux têtes de soudage distinctes, l'une délivrant le faisceau laser et l'autre l'arc électrique ou le jet de plasma, ceux-ci se réunissant dans la zone de soudage, comme par exemple enseigné par les documents WO-A-01/05550 ou EP-A-1084789.

Lors de la réalisation du joint de soudure, il est indispensable d'utiliser un gaz d'assistance pour assister le faisceau laser et protéger la zone de soudage des agressions extérieures et un gaz pour l'arc électrique, en particulier un gaz plasmagène servant à créer le jet de plasma d'arc dans le cas d'un procédé arc-plasma.

L'arc électrique peut être un jet de plasma d'arc, un arc TIG générée par une électrode en tungstène non fusible ou un arc MIG généré à l'extrémité d'une électrode fusible permettant, lors de sa fusion progressive, d'alimenter le bain de métal en fusion en métal d'apport additionnel. Dans tous les cas, le faisceau laser et l'arc se combinent de façon à concentrer localement suffisamment de densité de puissance (énergie de soudage) pour fondre les chants 1a à 4a des pièces 1 à 4 à souder.

L'invention peut être utilisée pour assembler des pièces métalliques ayant des épaisseurs égales ou différentes et/ou des compositions métallurgiques ou des nuances métallurgiques identiques ou différentes.

Il va de soi que, pour obtenir un joint 6 de soudure complet comme montré sur la figure 10, les pièces à souder et la tête de soudage sont animées d'un mouvement de déplacement relatif les unes par rapport à l'autre, c'est-à-dire soit les pièces sont fixes et la tête de soudage se déplace, soit l'inverse.

Par ailleurs, il est à souligner que la phase de soudage peut se faire en une ou plusieurs passes.

Le procédé de l'invention est applicable au soudage de toute structure formée de plusieurs épaisseurs métalliques apte à être soudée sur chant et peut par exemple être utilisé pour souder des parties d'échangeurs thermiques.

Le procédé de l'invention est également applicable au soudage sur chants de bords relevés de tubes ou de profilés, c'est-à-dire de pièces de même épaisseur ou d'épaisseurs différentes dont les bords se projettent vers l'extérieur en étant soudés sur chants selon le procédé de l'invention.

## Revendications

1. Procédé de soudage hybride arc-laser de plusieurs pièces (1 à 4) métalliques à souder mettant en oeuvre au moins un faisceau laser et au moins un arc électrique, **caractérisé en ce que** lesdites pièces métalliques (1 à 4) sont superposées en une configuration multi-épaisseurs et **en ce que** ledit faisceau laser et ledit arc électrique viennent souder sur chants (1a à 4a) ladite configuration multi-épaisseurs (1a, 2a, 3a, 4a).

2. Procédé selon la revendication 1, **caractérisé en ce que** l'arc électrique et le faisceau laser viennent frapper et souder une même zone située sur chants.

3. Procédé selon l'une des revendications 1 ou 2, **caractérisé en ce que** l'arc électrique et le faisceau laser viennent frapper approximativement à mi-distance selon l'épaisseur (E) de la configuration multi-épaisseurs.

4. Procédé selon l'une des revendications 1 à 3, **caractérisé en ce que** les pièces sont des plaques ou des feuilles métalliques.

5. Procédé selon l'une des revendications 1 à 4, **caractérisé en ce que** le faisceau laser est généré par un oscillateur laser de type CO₂ ou YAG.

6. Procédé selon l'une des revendications 1 à 5, **caractérisé en ce que** la configuration multi-épaisseurs comprend de 2 à 100 pièces, de préférence de 3 à 10.

7. Procédé selon l'une des revendications 1 ou 6, **caractérisé en ce que** la configuration multi-épaisseurs a une épaisseur totale (E) comprise entre 0.5 et 20 mm.

8. Procédé selon l'une des revendications 1 à 7, **caractérisé en ce que** le faisceau laser et l'arc plasma sont délivrés, en étant combinés ensemble, par le même orifice d'une buse de soudage.

9. Procédé selon l'une des revendications 1 à 8, **caractérisé en ce que**, durant le soudage, on met en oeuvre un gaz contenant de l'argon, de l'hélium ou les deux.

10. Procédé selon l'une des revendications 1 à 9, **caractérisé en ce que** la distance (D) de pénétration de la soudure sur chants est comprise entre 0.5 mm et 10 mm.

11. Procédé selon l'une des revendications 1 à 10, **caractérisé en ce que** l'arc électrique est généré par une électrode fusible ou non fusible.

12. Procédé selon l'une des revendications 1 à 11, **caractérisé en ce que** les pièces à souder sont en un matériau choisi parmi les aciers alliés ou non-alliés, ferritiques ou austénitiques, éventuellement revêtus d'une couche de zinc.

## Claims

1. Hybrid arc/laser welding method for several metal workpieces (1 to 4) to be welded using at least one laser beam and at least one electric arc, **characterized in that** said metal workpieces (1 to 4) are superposed in a multi-thickness configuration and **in that** said laser beam and said electric arc weld, along edges (1a to 4a), said multi-thickness configuration (1a, 2a, 3a, 4a).

2. Method according to Claim 1, **characterized in that** the electric arc and the laser beam strike and weld the same zone located on the edges.

3. Method according to either of Claims 1 and 2, **characterized in that** the electric arc and the laser beam strike at approximately mid-distance along the thickness (E) of the multi-thickness configuration.

4. Method according to one of Claims 1 to 3, **characterized in that** the workpieces are metal plates or sheets.

5. Method according to one of Claims 1 to 4, **characterized in that** the laser beam is generated by a laser oscillator of CO₂ or YAG type.

6. Method according to one of Claims 1 to 5, **characterized in that** the multi-thickness configuration comprises from 2 to 100 workpieces, preferably from 3 to 10 workpieces.

7. Method according to either of Claims 1 and 6, **characterized in that** the multi-thickness configuration has a total thickness (E) of between 0.5 and 20 mm.

8. Method according to one of Claims 1 to 7, **characterized in that** the laser beam and the plasma arc are delivered, being combined together, via the same orifice of a welding nozzle.

9. Method according to one of Claims 1 to 8, **characterized in that**, during the welding, a gas containing argon or helium, or both these, is used.

10. Method according to one of Claims 1 to 9, **characterized in that** the depth of penetration (D) of the edge weld is between 0.5 mm and 10 mm.

11. Method according to one of Claims 1 to 10, **characterized in that** the electric arc is generated by a consumable or nonconsumable electrode.

12. Method according to one of Claims 1 to 11, **characterized in that** the workpieces to be welded are made of a material chosen from ferritic or austenitic, alloy or nonalloy steels, optionally coated with a zinc coating.

## Patentansprüche

1. Verfahren zum Laser-Lichtbogen-Hybridschweißen von mehreren (1 bis 4) zu schweißenden Metallstücken unter Verwendung von wenigstens einem Laserstrahl und wenigstens einem Lichtbogen, **dadurch gekennzeichnet, dass** die Metallstücke (1 bis 4) in einer Mehrfach-Dicken-Anordnung übereinander geschichtet sind und **dadurch**, dass der Laserstrahl und der Lichtbogen die Mehrfach-Dicken-Anordnung (1a, 2a, 3a, 4a) kanten- (1a bis 4a) schweißen.

2. Verfahren nach Anspruch 1, **dadurch gekennzeichnet, dass** der Lichtbogen und der Laserstrahl auf eine gleiche Zone auftreffen und kantenschweißen.

3. Verfahren nach einem der Ansprüche 1 oder 2, **dadurch gekennzeichnet, dass** der Lichtbogen und der Laserstrahl ungefähr auf halber Distanz gemäß der Dicke (E) der Mehrfach-Dicken-Anordnung auftreffen.

4. Verfahren nach einem der Ansprüche 1 bis 3, **dadurch gekennzeichnet, dass** die Stücke MetallPlatten oder -Folien sind.

5. Verfahren nach einem der Ansprüche 1 bis 4, **dadurch gekennzeichnet, dass** der Laserstrahl von einem Laseroszillator des Typs CO₂ oder YAG erzeugt wird.

6. Verfahren nach einem der Ansprüche 1 bis 5, **dadurch gekennzeichnet, dass** die Mehrfach-Dicken-Anordnung 2 bis 100 Stücke umfasst, vorzugsweise 3 bis 10.

7. Verfahren nach einem der Ansprüche 1 bis 6, **dadurch gekennzeichnet, dass** die Mehrfach-Dicken-Anordnung eine Gesamtdicke (E) zwischen 0,5 und 20 mm aufweist.

8. Verfahren nach einem der Ansprüche 1 bis 7, **dadurch gekennzeichnet, dass** der Laserstrahl und der Plasma-Lichtbogen, die zusammen kombiniert sind, durch die gleiche Öffnung einer Schweißdüse abgegeben werden.

9. Verfahren nach einem der Ansprüche 1 bis 8, **dadurch gekennzeichnet, dass** während des Schweißens ein Gas verwendet wird, das Argon, Helium oder beides enthält.

10. Verfahren nach einem der Ansprüche 1 bis 9, **dadurch gekennzeichnet, dass** die Schweißdistanz (D) des Kantenschweißens zwischen 0,5 mm und 10 mm liegt.

11. Verfahren nach einem der Ansprüche 1 bis 10, **dadurch gekennzeichnet, dass** der Lichtbogen von einer schmelzbaren oder nicht-schmelzbaren Elektrode erzeugt wird.

12. Verfahren nach einem der Ansprüche 1 bis 11, **dadurch gekennzeichnet, dass** die zu schweißenden Stücke aus einem Material bestehen, das aus legierten oder nicht-legierten, ferritischen oder austenitischen Stählen ausgewählt wird, die möglicherweise mit einer Zinkschicht überzogen sind.
